# EUROPEAN PATENT APPLICATION

(11) **EP 2 194 497 A1**
(43) Date of publication of application: **09.06.2010**
(21) Application number: 09176986.9
(22) Date of filing: 25.11.2009
(51) Int. Cl.: G06Q 10/00, A47F 5/00, G06Q 30/00

(54) **Electronic shelf label and product management system**

(30) Priority: 03.12.2008 JP 2008308850
(71) Applicant: ISHIDA CO., Ltd., Kyoto-shi, Kyoto 606-8392 (JP)
(72) Inventor: Nakamura, Kazutomo, Shiga 520-3026 (JP)
(74) Representative: Kastel, Stefan

(57) **Abstract**

An electronic shelf label (5) includes a display unit (51) and a display control unit (57). The display unit is configured and arranged to display product information pertaining to a product corresponding to the electronic shelf label. The display control unit (57) is configured to control the display unit (51) to display on-order information (51e) when the display control unit receives a first prescribed signal from outside the electronic shelf label. The on-order information indicates that the product corresponding to the electronic shelf label is on order.

## Description

### CROSS-REFERENCE TO RELATED APPLICATIONS

This application claims priority to Japanese Patent Application No. 2008-308850, filed on December 3, 2008. The entire disclosure of Japanese Patent Application No. 2008-308850 is hereby incorporated herein by reference.

### BACKGROUND OF THE INVENTION

### Field of the Invention

The present invention relates to an electronic shelf label that is arranged in correspondence to a product and displays product information pertaining to the corresponding product, and a product management system that is equipped with the electronic shelf label. Background Information

Usually, in stores such as supermarkets and convenience stores, prices of products inside the store are unitarily managed by a product master stored in a POS system or the like. Meanwhile, conveyance of the prices to customers (consumers) is often done by paper medium shelf labels that are arranged in positions of the products. When such paper medium shelf labels are employed, it is easy for human errors such as price errors to arise because management of the shelf labels must rely upon human work. For this reason, wrong prices that differ from the prices at the time of checkout by a register in a POS system may be conveyed to customers.

In order to solve this problem, as described also in Japanese Laid-Open Patent Application Publication No. 2004-265195, electronic shelf label systems (ESL systems) have been put to practical use in recent years. In an electronic shelf label system, portable electronic shelf labels that display product information such as prices pertaining to products are arranged in correspondence to each of the products. Additionally, communication signals including information representing prices based on the product master are transmitted from an information delivery device to each of the electronic shelf labels, and those prices are displayed on each of the electronic shelf labels. Thus, right prices that match the prices at the time of checkout are displayed on the electronic shelf labels, and right prices are conveyed to customers.

Further, in Japanese Laid-Open Patent Application Publication Nos. 5-94455, 9-185662, 2003-11548 and 2003-228665, there are disclosed technologies relating to methods of placing orders for products.

### SUMMARY OF THE INVENTION

In supermarkets and convenience stores, extremely many products are displayed on a product shelf, so when a terminal that instructs placement of orders for the products such as a handy terminal is utilized to perform order placement in order in regard to a plurality of products arranged on the product shelf, it is not easy to identify for which of the products order processing has been completed. For that reason, there is a potential for product order placement oversight to occur.

Thus, the present invention has been made in light of the above-described point, and it is an object thereof to provide a technology that can utilize an electronic shelf label to prevent product order placement oversight.

In order to solve the above-described problem, an electronic shelf label according to a first aspect of the present invention includes a display unit and a display control unit. The display unit is configured and arranged to display product information pertaining to a product corresponding to the electronic shelf label. The display control unit is configured to control the display unit to display on-order information when the display control unit receives a first prescribed signal from outside the electronic shelf label. The on-order information indicates that the product corresponding to the electronic shelf label is on order.

Moreover, a product management system according to a second aspect of the present invention includes an electronic shelf label, an information delivery device and a portable order processing terminal. The electronic shelf label is configured and arranged to display product information pertaining to a product corresponding to the electronic shelf label. The information delivery device is configured and arranged to deliver the product information to the electronic shelf label. The portable order processing terminal is configured and arranged to perform an order placement operation to instruct placement of order for the product. The information delivery device is configured and arranged to output a first prescribed signal to the electronic shelf label corresponding to the product for which the order placement operation has been performed in the order processing terminal. The electronic shelf label is configured and arranged to display on-order information indicating that the product corresponding to the electronic shelf label is on order when the electronic shelf labels receives the first prescribed signal.

### BRIEF DESCRIPTION OF THE DRAWINGS

Referring now to the attached drawings which form a part of this original disclosure:

FIG. 1 is a diagram showing an example of a state where electronic shelf labels of an electronic shelf label system pertaining to a first embodiment are arranged in a product shelf.

FIG. 2 is a block diagram showing a configuration example of a product management system that includes the electronic shelf label system pertaining to the first embodiment.

FIG. 3 is a perspective diagram showing an example of an order processing terminal pertaining to the first embodiment of the present invention.

FIG. 4 is a block diagram showing the configuration example of an ESL server pertaining to the first embodiment of the present invention.

FIG. 5 is a diagram showing an example of a product file.

FIG. 6 is a diagram showing an example of the electronic shelf label pertaining to the first embodiment.

FIG. 7 is a flowchart showing a series of processing steps from placement of an order for an order placement target product to display of on-order information on the electronic shelf label corresponding to that order placement target product.

FIG. 8 is a diagram showing a display example of the on-order information on the electronic shelf label pertaining to the first embodiment.

FIG. 9 is a diagram showing another display example of the on-order information on the electronic shelf label pertaining to the first embodiment.

FIG. 10 is a diagram showing yet another display example of the on-order information on the electronic shelf label pertaining to the first embodiment.

FIG. 11 is a diagram showing yet another display example of the on-order information on the electronic shelf label pertaining to the first embodiment.

FIG. 12 is a diagram showing yet another display example of the on-order information on the electronic shelf label pertaining to the first embodiment.

FIG. 13 is a flowchart showing a series of processing steps for clearing display of the on-order information on the electronic shelf label.

FIG. 14 is a block diagram showing a configuration example of a modified ESL server pertaining to the first embodiment.

FIG. 15 is a diagram showing a modified example of the electronic shelf label pertaining to the first embodiment.

FIG. 16 is a flowchart showing a series of processing steps for displaying do-not-order decision information on the electronic shelf label pertaining to a second embodiment.

FIG. 17 is a diagram showing a display example of the do-not-order decision information on an electronic shelf label pertaining to the second embodiment.

FIG. 18 is a flowchart showing a series of processing steps for displaying inventory status information on the electronic shelf label according to a third embodiment.

FIG. 19 is a diagram showing a display example of the inventory status information displayed on the electronic shelf label according to the third embodiment.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

### FIRST EMBODIMENT

### OVERVIEW OF ELECTRONIC SHELF LABEL

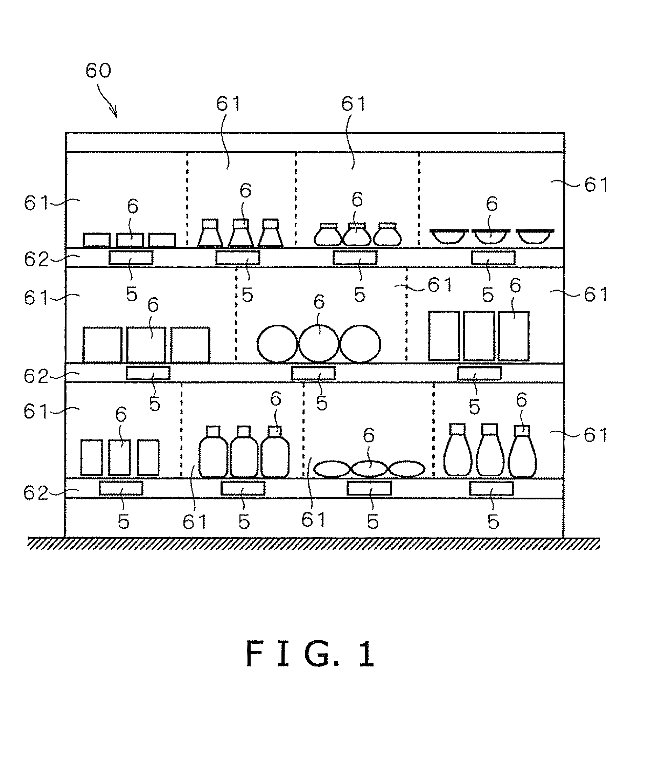

FIG. 1 is a diagram showing a plurality of electronic shelf labels 5 of an electronic shelf label system 1 according to a first embodiment of the present invention are arranged on a product shelf 60 in a store. The electronic shelf labels 5 display product information such as prices pertaining to products 6. Further, the electronic shelf labels 5 are portable. In this electronic shelf label system 1, the electronic shelf labels 5 are arranged in correspondence to each of the products 6. A communication signal is transmitted from an information delivery device to each of the electronic shelf labels 5. The communication signal includes information representing a price based on a product master. A price based on the transmitted communication signal is displayed on each of the electronic shelf labels 5. Thus, right prices that match prices at the time of checkout are displayed on the electronic shelf labels 5, and right prices are conveyed to customers.

As shown in FIG. 1, the product shelf 60 is divided into a plurality of sections 61 (sometimes called "faces"). Products 6 of the same type are placed together in each of the sections 61. The electronic shelf labels 5 are respectively attached to positions on frames 62 of the product shelf 60 that correspond to each of the sections 61. That is, each of the electronic shelf labels 5 is respectively corresponded to one of the products 6 (specifically, one product type). Further, the electronic shelf labels 5 are arranged on the frames 62 near their corresponding products 6 (for example, below the products 6). Each of the electronic shelf labels 5 is equipped with a display. The price of the corresponding product 6 is displayed on the display. Customers (consumers) in the store become aware of the prices of the products 6 by such display of the electronic shelf labels 5.

The electronic shelf labels 5 are portable devices and are configured such that they can be removed from the frames 62 and rearranged in different positions so as to be capable of responding to changes in the arrangement of the products 6. In the first embodiment, a plurality of product shelves such as the product shelf 60 shown in FIG. 1 is preferably arranged in a sales space inside the store.

### CONFIGURATION OF PRODUCT MANAGEMENT SYSTEM

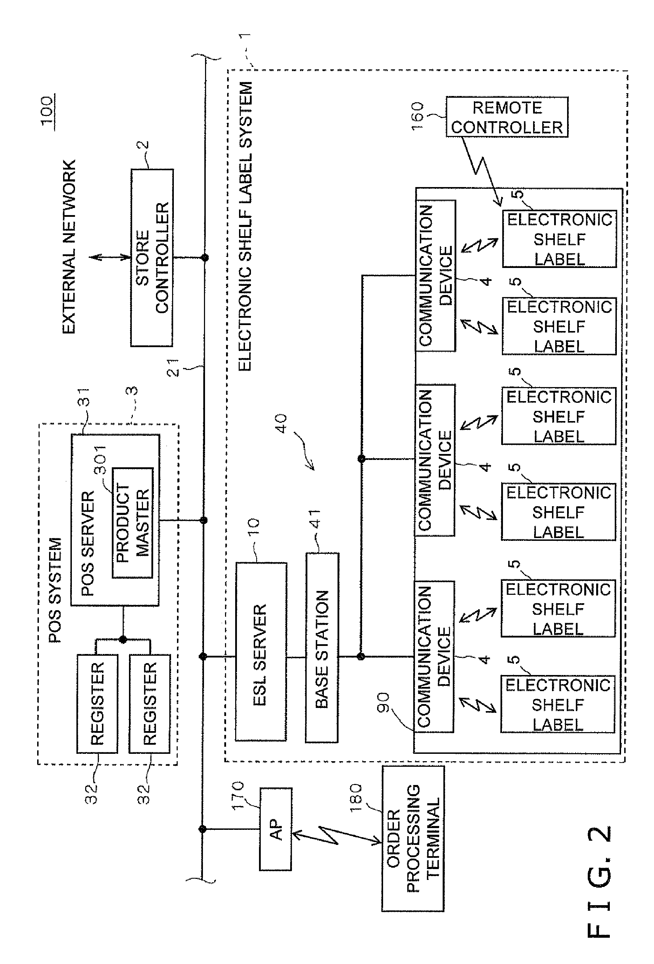

FIG. 2 is a diagram showing a configuration example of a product management system 100 that is applied to the store. The product management system 100 includes the electronic shelf label system 1. As shown in FIG. 2, the product management system 100 is equipped with the electronic shelf label system 1, a store controller 2 and a POS system 3. The POS system 3 is equipped with a POS server 31. The electronic shelf label system 1 is equipped with an ESL server 10. The POS server 31 and the ESL server 10 are connected to the store controller 2 by a LAN 21. Thus, data communication is made possible between the store controller 2, the POS system 3 and the electronic shelf label system 1.

The store controller 2 is preferably a computer configured to manage the product management system 100 according to the illustrated embodiment. Further, the store controller 2 is preferably connected to an external network such as the Internet. The store controller 2 is preferably configured to be capable of communicating via the external network with a computer such as a server device disposed in a head office center. The head office center generally manages the store.

The POS system 3 is a system that collects and analyzes information pertaining to sales of the products 6 at their points of sale. The POS system 3 is equipped with the POS server 31 and a plurality of registers 32. The POS server 31 generally manages the POS system 3. The registers 32 perform checkout of the products 6. The POS server 31 and the registers 32 are preferably interconnected by a dedicated communication cable.

The POS server 31 is preferably a computer configured to manage the POS system 3 according to the illustrated embodiment. A product master 301 is stored in a hard disk of the POS server 31. The product master 301 represents various types of information pertaining to the products 6 such as prices. The registers 32 perform checkout of the products 6 on the basis of the prices listed in the product master 301.

Information pertaining to all of the products 6 inside the store is unitarily managed by this product master 301. Product codes, product names, regular prices, special sale prices, special sale periods, sales figures and inventory quantities are included in the information listed in the product master 301. The product codes are codes for identifying the products 6. The product names are names of the products 6. The regular prices are usual prices for the products. The special sale prices are prices during special sales which are typically lower than the regular prices. The special sale periods are periods during which special sales are implemented.

Further, an access point (AP) 170 is connected to the LAN 21. The access point 170 is a wireless LAN radio transponder. A portable order processing terminal 180 that is used when placing orders for the products 6 can be connected to the LAN 21 through the access point 170 and can communicate with the store controller 2, the POS server 31 and the ESL server 10. When a predetermined operation is executed by a member of the store staff, the order processing terminal 180 utilizes the wireless LAN to output order instruction information to the store controller 2. The order instruction information is information instructing placement of orders for the products 6. For example, product codes for identifying products 6 for which orders are to be placed and order quantities of those products 6 are included in the order instruction information. The store controller 2 also functions as an order placement server that accepts order instructions from the order processing terminal 180. The store controller 2 notifies the head office center of the inputted order instruction information. The head office center places, on the basis of the order instruction information from each store, orders for the products 6 with servers of vendors to which the orders are to be placed.

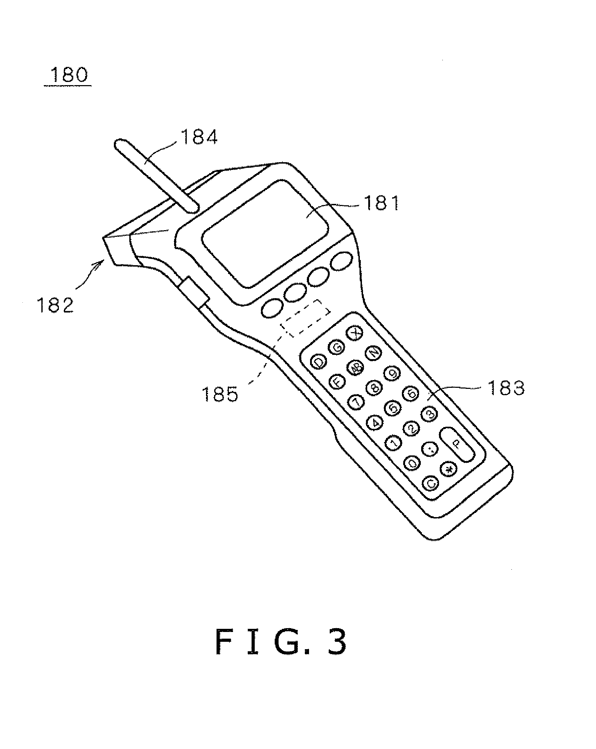

FIG. 3 is a perspective diagram showing the detailed configuration of the order processing terminal 180. As shown in FIG. 3, the order processing terminal 180 is a portable service terminal called a "handy terminal". The order processing terminal 180 is equipped with a display 181, a barcode reader 182 and an operation unit 183. The display 181 displays various types of information. The barcode reader 182 reads barcodes. The operation unit 183 accepts various types of operations by members of the store staff. Further, the order processing terminal 180 is equipped with a communication unit 184. The communication unit 184 performs wireless communication with the access point 170. Because of the function of this communication unit 184, the order processing terminal 180 can communicate with the store controller 2, the POS server 31 and the ESL server 10 through the access point 170. Additionally, a control unit 185 that generally manages operation of the order processing terminal 180 is disposed in the order processing terminal 180. The control unit 185 includes a CPU and a memory.

The electronic shelf label system 1 is equipped with the electronic shelf labels 5, an information delivery device 40 and a portable remote controller 160. The information delivery device 40 delivers the prices and the like of the products 6 that are to be displayed on the electronic shelf labels 5. The remote controller 160 is used when switching display screens of the electronic shelf labels 5.

The information delivery device 40 is equipped with the ESL server 10, a plurality of communication devices 4 and a base station 41. The ESL server 10 is a server device that generally manages the electronic shelf label system 1. The base station 41 functions as a transponder of signals between the ESL server 10 and the communication devices 4. The ESL server 10 and the communication devices 4 are configured to be capable of mutual data communication through the base station 41. Each of the communication devices 4 performs infrared communication with the electronic shelf labels 5. The communication devices 4 are arranged at substantially constant distances in the ceiling or the like of a sales space 90 such that the communication devices 4 can communicate with all of the electronic shelf labels 5 arranged inside the sales space 90.

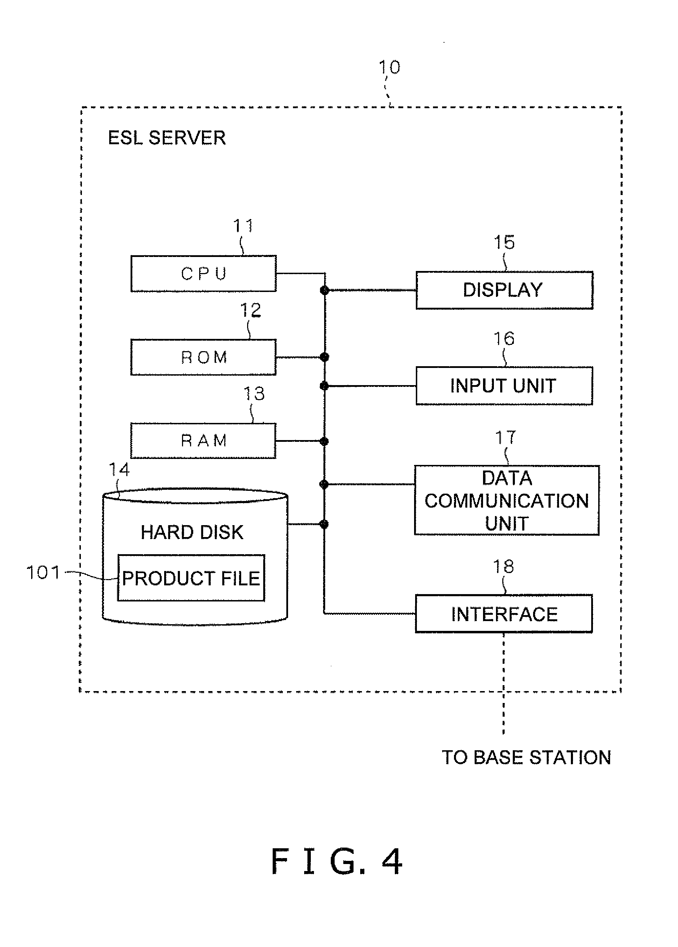

FIG. 4 is a diagram showing the configuration of the ESL server 10. The ESL server 10 is equipped with a CPU 11, a ROM 12, a RAM 13, a hard disk 14, a display 15, an input unit 16, a data communication unit 17 and an interface 18. The CPU 11 performs various types of arithmetic processing. The ROM 12 stores a boot program and the like. The RAM 13 becomes a work region of arithmetic processing. The hard disk 14 stores programs and various types of data files. The display 15 performs various types of display. The input unit 16 includes a keyboard and a mouse. The data communication unit 17 has a data communication function via the LAN 21. The interface 18 is for communicating with the base station 41. Signals representing prices that are to be transmitted to the electronic shelf labels 5 are conveyed to the communication devices 4 through the interface 18 and the base station 41.

An operation program is stored beforehand in the hard disk 14 of the ESL server 10. Various types of functions of the ESL server 10 are realized by the CPU 11 performing arithmetic processing in accordance with this operation program. Further, a product file 101 is stored in the hard disk 14 of the ESL server 10. The product file 101 is a data file representing various types of information pertaining to the products 6.

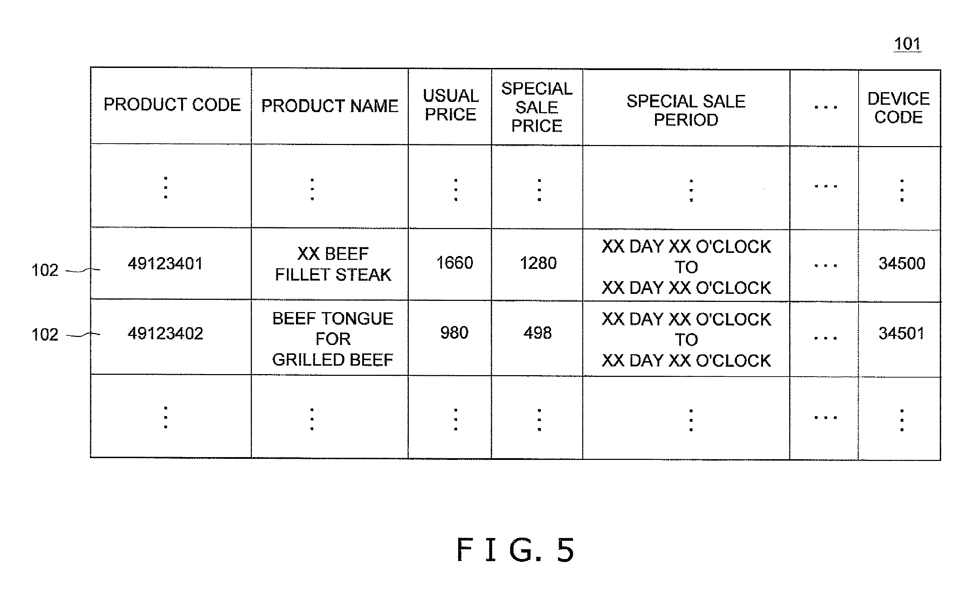

FIG. 5 is a diagram showing an example of the product file 101. As shown in FIG. 5, the product file 101 is in table form. Each record 102 represents information pertaining to one of the products 6. Specifically, a product code, a product name, a regular price, a special sale price, a special sale period, a sales figure and an inventory quantity are registered in each record 102. These pieces of information are the same pieces of information as those in the product master 301 stored in the POS system 3 and are registered on the basis of the information in the product master 301 by communication between the ESL server 10 and the POS system 3. For this reason, the information in the product file 101 and the information in the product master 301 match in their contents.

Moreover, one "device code" is registered in each of the records 102 in the product file 101. The "device code" is a hardware ID that is unique to each of the electronic shelf labels 5 with which the electronic shelf label system 1 is equipped. Thus, the products 6 and the electronic shelf labels 5 are corresponded to each other (linked) in terms of data in one-to-one relationships. As a result of these device codes being utilized, the price of a certain product 6 is transmitted with respect to the electronic shelf label 5 corresponding to that product 6.

The ESL server 10 having the above configuration generates, in the CPU 11, transmission data to be transmitted to each of the electronic shelf labels 5 and outputs the transmission data to each of the communication devices 4 through the interface 18 and the base station 41. Each of the communication devices 4 outputs a communication signal including the inputted transmission data to each of the electronic shelf labels 5 with which that communication device 4 is communicable. Thus, the same transmission data are inputted with respect to each of the electronic shelf labels 5 arranged in the sales space 90 from the information delivery device 40. Product information, such as the regular prices and the special sale prices, and the device codes in the product file 101 are included in the transmission data transmitted from the ESL server 10.

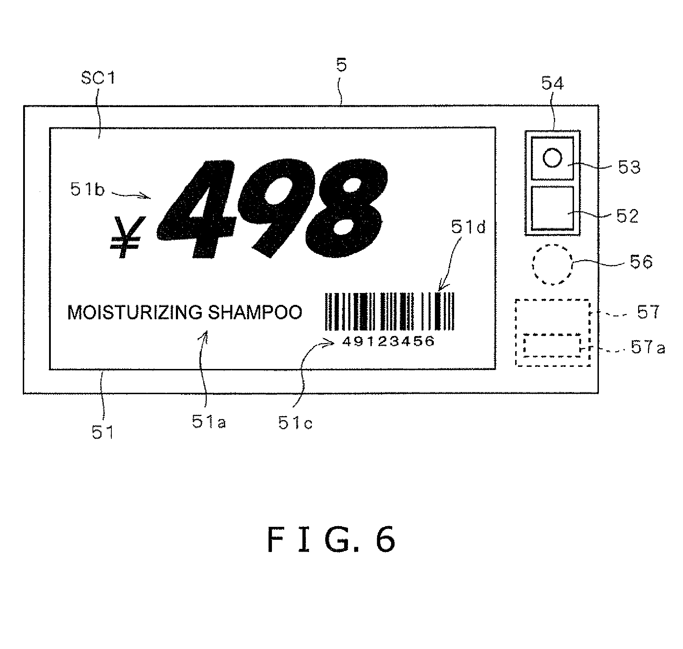

Next, the configuration of the electronic shelf labels 5 will be described in detail. FIG. 6 is a diagram showing the configuration of the electronic shelf label 5. As shown in FIG. 6, a display 51 and a communication unit 54 are arranged on the front side of the electronic shelf label 5. The display 51 displays product information. The communication unit 54 undertakes communication with the information delivery device 40. Further, a label is adhered to the back side of the electronic shelf label 5. A character string representing the device code of its own device and a barcode are printed on the label.

The communication unit 54 is equipped with a light-emitting component 52 and a light-receiving component 53. The light-emitting component 52 outputs an infrared signal. The light-receiving component 53 receives an infrared signal from the communication devices 4 and an infrared signal from the remote controller 160. Further, the light-receiving component 53 converts the infrared signals into electric signals and outputs the electric signals to a later-described control unit 57. The light-emitting component 52 that functions as a transmitter component that transmits data is configured by an LED, for example. Further, the light-receiving component 53 that functions as a receiver component that receives data is configured by a photodiode and an amp, for example.

The display 51 is a dot matrix nonvolatile display unit and is configured by electronic paper, for example. A nonvolatile display unit such as electronic paper can hold display content without drive power having to be applied thereto. Further, because the display 51 is a dot matrix display unit, it can display not only numbers representing the prices of the products 6 but also characters, symbols and figures. A price 51b of the product 6 to which the device is corresponded and a product name 51a of that product 6 are displayed on the display 51 of the electronic shelf label 5. Moreover, a character string 51c representing, in numbers, the product code of the product 6 to which the display's own device is corresponded and a barcode 51d representing that product code are displayed side-by-side on the display 51 in the direction in which that barcode 51d extends.

The electronic shelf label 5 has a compact battery 56 and a control unit 57. The compact battery 56 and the control unit 57 are disposed inside the electronic shelf label 5. The compact battery 56 supplies power to the electronic shelf label 5. The control unit 57 generally controls operation of the electronic shelf label 5. The control unit 57 includes a CPU and a memory 57a. Various types of information, such as the price and the product name that are to be displayed on the display 51, and the device code of the memory's own device are stored in the memory 57a. Information such as the price included in the infrared signals outputted from the communication devices 4 is received by the communication unit 54 and is thereafter inputted to the control unit 57. The control unit 57 temporarily stores that inputted information in the memory 57a. Additionally, the control unit 57 controls the display 51 and causes the display 51 to display the various types of information inside the memory 57a. In this manner, the control unit 57 functions as a display control unit that controls display of the display 51.

In the first embodiment, the remote controller 160 can be utilized to switch the display screen of the electronic shelf label 5 from the screen shown in FIG. 6 to several other screens. A plurality of operation buttons and an infrared communication unit are disposed in the remote controller 160. In the remote controller 160, when a certain operation button is pressed down, a type of infrared signal corresponding to that operation button is outputted from the infrared communication unit. In the electronic shelf label 5, when the light-receiving component 53 receives the infrared signal from the remote controller 160, the control unit 57 controls the display 51 such that a screen corresponding to that type of infrared signal is displayed on the display 51. For example, a screen showing a sales figure and an inventory quantity is displayed on the display 51. In this manner, by pressing down each of the operation buttons of the remote controller 160, the display screen of the electronic shelf label 5 can be switched from the screen shown in FIG. 6 to a screen corresponding to the operation button that has been pressed down.

### BASIC OPERATION OF ELECTRONIC SHELF LABEL SYSTEM

Next, operation of the electronic shelf label system 1 for displaying a price on the electronic shelf label 5 will be described. In this electronic shelf label system 1, delivery of the prices from the information delivery device 40 to the electronic shelf labels 5 is done at the time of system startup and when updating the prices that are displayed on the electronic shelf labels 5. Examples of times "when updating the prices" are times when the regular prices in the product master 301 have been changed and times when changing the prices from the regular prices to special sale prices when implementing a special sale apply. At the time of system startup, delivery of the prices is done in relation to all of the products 6 inside the store. On the other hand, when updating the prices, delivery of the prices is done in relation only to target products 6. Thus, the prices displayed on the electronic shelf labels 5 and the prices at the time of checkout by the registers 32 always match. Below, operation pertaining to delivery of a price in relation to one of the products 6 will be described. In the description below, the product 6 that becomes the target of price delivery will be called a "target product 6".

First, in the ESL server 10 of the information delivery device 40, the record 102 pertaining to the target product 6 in the product file 101 is referenced, and the price of the regular price and the special sale price that is to be delivered and the device code are acquired. The device code acquired here is the device code of the electronic shelf label 5 corresponding to the target product 6, and the acquired price becomes the price that the electronic shelf label 5 is to display. The price and the device code are transmitted to each of the communication devices 4 through the base station 41 as electric signals. Then, the communication devices 4 output an infrared signal including information of the price and the device code.

The infrared signal outputted from the communication devices 4 is received and converted into an electric signal in the communication unit 54 of the electronic shelf label 5. The control unit 57 acquires the price and the device code from the electric signal obtained by the communication unit 54.

Next, the control unit 57 determines whether or not the obtained device code matches the device code of its own device stored beforehand inside the memory 57a. When the acquired device code does not match the device code of its own device, the control unit 57 determines that the received infrared signal is a signal for another electronic shelf label 5 and ends processing. On the other hand, when the acquired device code matches the device code of its own device, the control unit 57 determines that the received infrared signal is a signal for its own device, causes the display 51 to display the obtained price, and updates the price being displayed on the display 51.

Delivery of a price from the information delivery device 40 to the electronic shelf label 5 is done by the above operation.

When the control unit 57 updates display of the display 51, the control unit 57 causes the light-emitting component 52 to output an infrared signal including information indicating that the electronic shelf label 5 has normally received the price. This infrared signal is received by the communication devices 4. Thereafter, the information included in that infrared signal is conveyed to the ESL server 10. When the ESL server 10 does not receive an infrared signal from the electronic shelf label 5, the ESL server 10 determines that the price it delivered was not normally received by the electronic shelf label 5 and performs processing to repeatedly deliver the price until the ESL server 10 receives an infrared signal from the electronic shelf label 5. Thus, the display of the electronic shelf label 5 can be reliably updated, and the reliability of the system can be significantly improved.

### DISPLAY OF ON-ORDER INFORMATION ON ELECTRONIC SHELF LABEL

In the product management system 100 pertaining to the first embodiment, the information displayed on the electronic shelf label 5 can be utilized to place an order for the product 6 corresponding to that electronic shelf label 5. Then, when an order for the product 6 is placed, on-order information indicating that that product 6 is on order is displayed on the electronic shelf label 5 corresponded with that product 6. Below, a series of processing steps from placement of an order for the product 6 to display of on-order information on the electronic shelf label 5 will be described. In the description below, the product 6 that is the target of order placement will be called an "order placement target product 6".

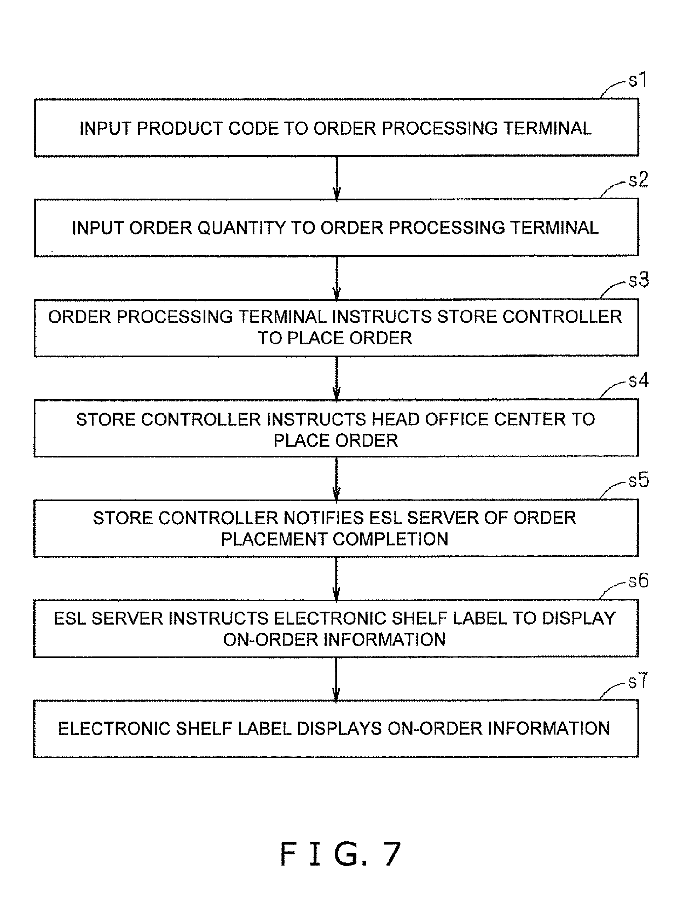

FIG. 7 is a flowchart showing a series of processing steps from placement of an order for the order placement target product 6 to display of on-order information on the electronic shelf label 5 corresponding to that order placement target product 6. When a certain product 6 runs low on the product shelf 60, a member of the store staff judges that product 6 to be an order placement target product 6. Then, in step s1, the member of the store staff inputs the product code of the order placement target product 6 to the order processing terminal 180. In step s1, for example, the member of the store staff uses the barcode reader 182 of the order processing terminal 180 to read the barcode 51d being displayed on the electronic shelf label 5 corresponding to the order placement target product 6. Thus, in the order processing terminal 180, the product code represented by the barcode 51d that has been read by the barcode reader 182 is inputted to the control unit 185. It will be noted that the member of the store staff may also input the product code of the order placement target product 6 to the order processing terminal 180 by operating the operation unit 183 and inputting the numbers represented by the character string 51c that the electronic shelf label 5 displays to the order processing terminal 180.

Next, in step s2, when the member of the store staff performs a predetermined operation with respect to the operation unit 183, an order quantity of the order placement target product 6 is inputted to the control unit 185. Then, in step s3, the control unit 185 generates order instruction information instructing placement of an order for the inputted order quantity of the product (order placement target product) 6 identified by the inputted product code. The product code and the order quantity of the order placement target product 6 are included in this order instruction information. Thereafter, when the member of the store staff performs a predetermined operation with respect to the operation unit 183, the communication unit 184 transmits, to the access point 170, a wireless signal including the order instruction information generated by the control unit 185. The wireless signal transmitted from the order processing terminal 180 is received by the access point 170, and the order instruction information included in that wireless signal is inputted to the store controller 2 through the LAN 21.

Next, in step s4, the store controller 2, which is an order placement server, notifies the head office center of the inputted order instruction information in order to instruct the head office center to place an order. Based on the order instruction information notified from the store controller 2, the head office center places an order, for the order placement target product 6 with the server of the vendor to which the order is to be placed.

When step s4 is executed, in step s5, the store controller 2 outputs order completion information notifying the ESL server 10 that placement of an order for the order placement target product 6 has been completed. The order completion information includes the product code of the order placement target product 6.

When the ESL server 10 receives the order completion information, in step s6, the ESL server 10 generates display instruction information instructing the electronic shelf label 5 to display on-order information. The electronic shelf label 5 corresponds to the product (order placement target product) 6 identified by the product code included in the order completion information. In the ESL server 10, the CPU 11 acquires the device code corresponding to the inputted product code from the product file 101 and generates display instruction information including that device code. The CPU 11 outputs the display instruction information to each of the communication devices 4 through the interface 18 and the base station 41. A communication signal including the display instruction information is outputted from each of the communication devices 4. Thus, the display instruction information is transmitted to the electronic shelf label 5 corresponding to the order placement target product 6.

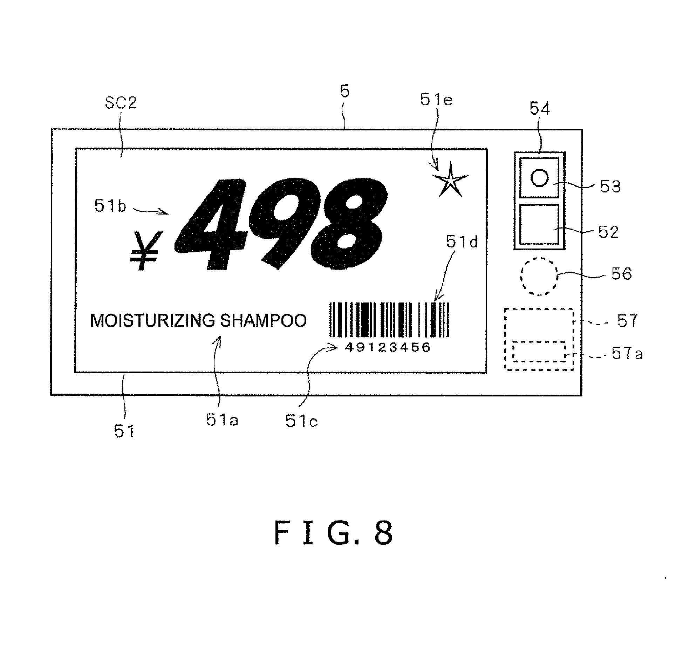

In the electronic shelf label 5, the control unit 57 determines whether or not the device code included in the communication signal received by the communication unit 54 and the device code of its own device stored beforehand inside the memory 57a match. When the device code included in the communication signal received by the communication unit 54 and the device code of its own device stored beforehand inside the memory 57a match, the control unit 57 causes, in step s7, the display 51 to display on-order information in accordance with the display instruction information included in the communication signal received by the communication unit 54. FIG. 8 is a diagram showing a state where on-order information 51e is displayed on the display 51. In the example shown in FIG. 8, a star-shaped figure is displayed on the display 51 as the on-order information 51e.

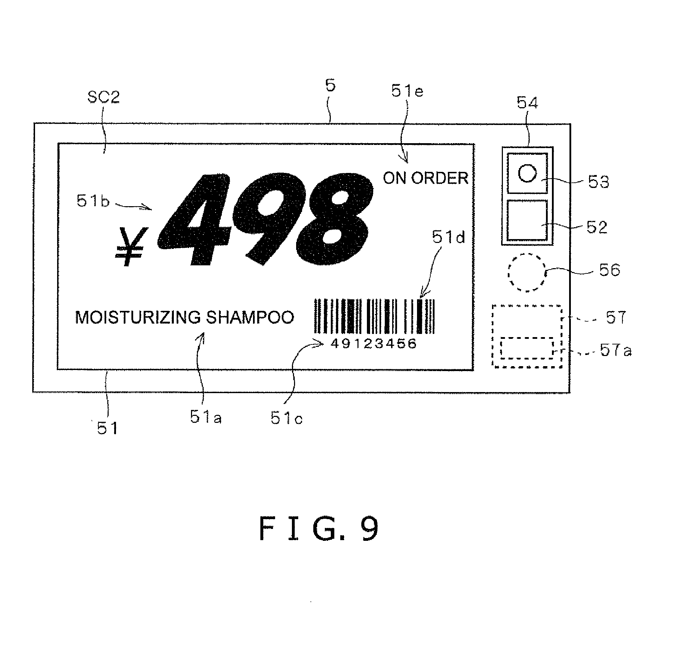

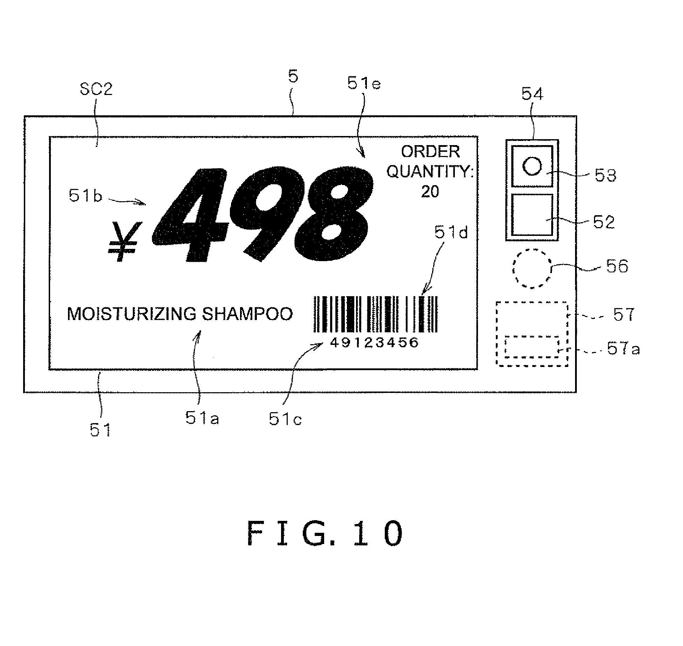

It will be noted that, as the on-order information 51e, a character or a symbol may also be displayed on the display 51, or a combination of two or more characters, a figure and a symbol may be displayed on the display 51. FIG. 9 is a diagram showing a state where a character string reading "On Order" is displayed on the display 51 as the on-order information 51e. Further, FIG. 10 is a diagram showing a state where the order quantity of the product 6 is displayed on the display 51 as the on-order information 51e. When the order quantity of the product 6 is displayed on the display 51 as in FIG. 10, in step s5, the store controller 2 outputs, to the ESL server 10, order completion information that also includes the order quantity of which it has been notified by the order processing terminal 180. Then, the ESL server 10 generates and outputs display instruction information that also includes the order quantity included in the received order completion information. Thus, display instruction information including the order quantity is inputted to the electronic shelf label 5, and the electronic shelf label 5 can display, on the display 51, the order quantity of the product 6 corresponding to itself.

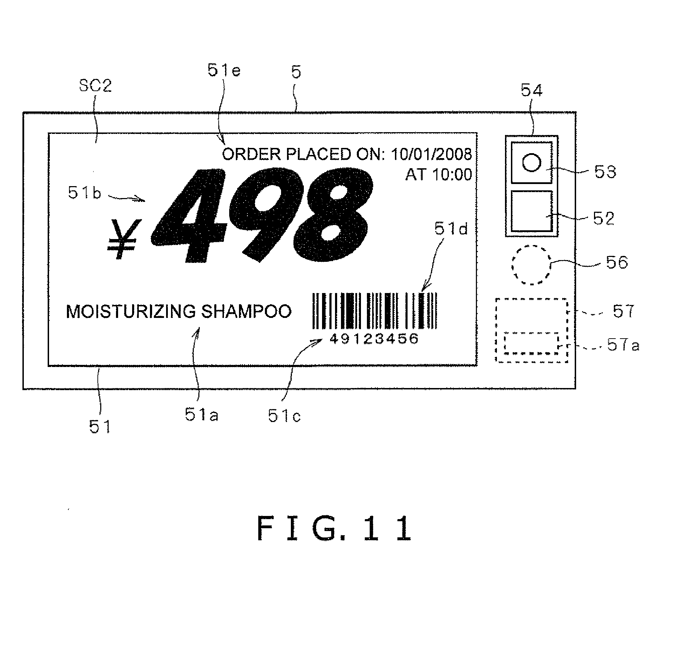

Further, as shown in FIG. 11, the date and time when an order has been placed for the product 6 may also be displayed on the display 51 as the on-order information 51e. When the date and time when an order has been placed for the product 6 is displayed on the display 51 as in FIG. 11, a clock unit that counts the current date and time is disposed in the store controller 2. Then, when the store controller 2 instructs the head office center to place an order for the order placement target product 6 in step s4, the store controller 2 acquires the current date and time from the clock unit, uses that date and time as the date and time of order placement, and outputs order completion information that also includes that date and time of order placement to the ESL server 10. When the ESL server 10 receives the order completion information from the store controller 2 in step s5, the ESL server 10 generates and outputs display instruction information that also includes the date and time of order placement included in the received order completion information. Thus, the display instruction information including the date and time when an order has been placed for the product 6 is inputted to the electronic shelf label 5, and the electronic shelf label 5 can display, on the display 51, the date and time when an order has been placed for the product 6 corresponding to itself. It will be noted that just the date when an order has been placed for the product 6 may also be displayed on the display 51 as the on-order information 51e.

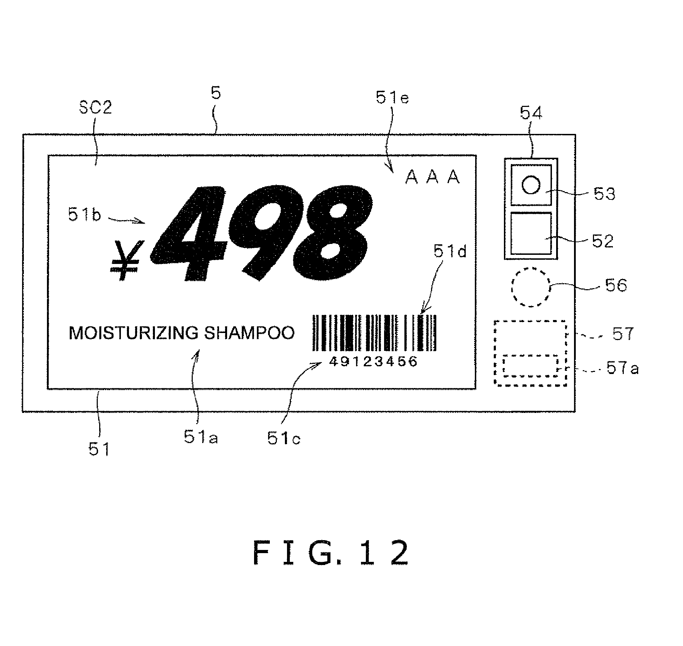

Further, as the on-order information 51e, worker identification information may also be displayed on the display 51. The worker identification information is information for identifying the worker (person in charge of placing orders) who performed order processing of the product 6. FIG. 12 is a diagram showing a state where worker identification information comprising three alphabetical letters, for example, is displayed on the display 51 as the on-order information 51e. When worker identification information is displayed on the display 51 as in FIG. 12, before step s3, a member of the store staff who is a worker operates the operation unit 183 of the order processing terminal 180 and inputs the worker identification information that has been allocated to him or her to the order processing terminal 180. The worker identification information inputted to the order processing terminal 180 is inputted to the control unit 185. In step s3, the control unit 185 generates order instruction information including the inputted product code, order quantity and worker identification information. That order instruction information is inputted to the store controller 2 through the communication unit 184, the access point 170 and the LAN 21. The store controller 2 instructs, in step s4, the head office center to place an order and thereafter outputs, to the ESL server 10, order completion information that also includes the inputted worker identification information. When the ESL server 10 receives the order completion information from the store controller 2 in step s5, the ESL server 10 generates and outputs display instruction information that also includes the worker identification information included in the received order completion information. Thus, the display instruction information that includes the worker identification information is inputted to the electronic shelf label 5, and the electronic shelf label 5 can display, on the display 51, the worker identification information for identifying the worker who placed an order for the product 6 corresponding to itself.

It will be noted that a combination of two or more of the order quantity, the date and time of order placement (date of order placement) and the worker identification information may also be displayed on the display 51 as the on-order information 51e.

As described above, in the first embodiment, the on-order information 51e indicating that the product 6 is on order is displayed on the electronic shelf label 5 corresponding to that product 6, so a worker performing order processing of the product 6 can, simply by looking at the display of the electronic shelf label 5, check whether or not placement of an order for the product 6 corresponding to that electronic shelf label 5 has been completed. Consequently, even when the worker utilizes the order processing terminal 180 to perform order placement in order in regard to a number of the products 6 arranged on the product shelf 60, the worker can easily identify for which of the products 6 order processing has been completed. Consequently, oversight in placing orders for the products 6 can be prevented.

Further, as shown in FIG. 10, as the on-order information 51e in regard to the product 6, by causing the electronic shelf label 5 corresponding to that product 6 to display the order quantity of that product 6, the worker can, simply by looking at the display of the electronic shelf label 5, check whether or not placement of an order for the product 6 corresponding to that electronic shelf label 5 has been completed and can check whether or not there is an error in the order quantity of that product 6. Thus, the worker can quickly correct the order quantity.

### METHOD OF CLEARING ON-ORDER INFORMATION

The on-order information 51e displayed on the electronic shelf label 5 is necessary to the store staff but is not necessary to customers (consumers) purchasing the product 6, and it is not preferred that the on-order information 51e be displayed on the electronic shelf label 5 indefinitely.

Thus, in the product management system 100 pertaining to the first embodiment, the order processing terminal 180 can be utilized to clear display of the on-order information 51e on the electronic shelf label 5. Below, processing when clearing display of the on-order information 51e on the electronic shelf label 5 will be described.

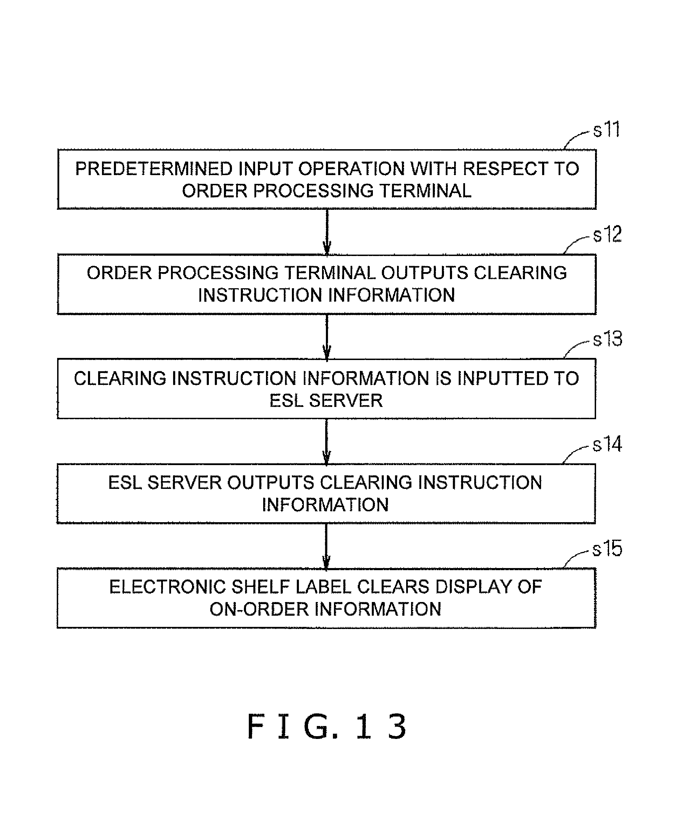

FIG. 13 is a flowchart showing a series of processing steps for clearing (removing) display of the on-order information 51e on the electronic shelf label 5. In step s11, when a predetermined operation is performed with respect to the operation unit 183 of the order processing terminal 180, or in other words when predetermined input is performed with respect to the operation unit 183 that functions as an input unit that accepts input from outside, the control unit 185 generates clearing instruction information. The clearing instruction information is information instructing clearing of display of the on-order information 51e on the electronic shelf label 5. Then, in step s12, the communication unit 184 outputs a wireless signal including the clearance instruction information generated by the control unit 185. It will be noted that the clearance instruction information generated by the order processing terminal 180 will sometimes be called "first clearance instruction information".

The first clearance instruction information outputted from the order processing terminal 180 is, in step s13, inputted to the ESL server 10 through the access point 170 and the store controller 2. When the first clearance instruction information is inputted to the ESL server 10, the ESL server 10 outputs, in step s14, clearance instruction information instructing the electronic shelf label 5 currently displaying the on-order information 51e to clear display of the on-order information 51e. The clearance instruction information is outputted to the electronic shelf label 5 through the base station 41 and the communication devices 4. The clearance instruction information generated by the ESL server 10 will sometimes be called "second clearance instruction information".

Here, in each of the records 102 in the product file 101 that the ESL server 10 stores, information as to whether or not the on-order information 51e is being displayed on the electronic shelf label 5 identified by the device code registered in that record 102 is also registered. In step s6, when the CPU 11 generates the display instruction information, the CPU 11 registers, with respect to the record 102 in which the device code of the electronic shelf label 5 corresponding to the order placement target product 6 is registered, that the on-order information 51e is displayed on that electronic shelf label 5. In the ESL server 10 to which the first clearing instruction information has been inputted, the CPU 11 references the product file 101 to acquire all of the devices codes of the electronic shelf labels 5 that are currently displaying the on-order information 51e. Then, the CPU 11 generates second clearance instruction information including one of the acquired device codes and outputs that to each of the communication devices 4 through the interface 18 and the base station 41.
Each of the communication devices 4 outputs a communication signal including the inputted second clearance instruction information. Next, the CPU 11 generates second clearance instruction information including another one of the acquired device codes and outputs that to each of the communication devices 4 through the interface 18 and the base station 41. Each of the communication devices 4 similarly outputs a communication signal including the inputted second clearance instruction information. This processing is performed until all the device codes that the CPU 11 has acquired are outputted from each of the communication devices 4.

In the electronic shelf label 5, the control unit 57 determines whether or not the device code included in the communication signal received by the communication unit 54 and the device code of its own device stored beforehand inside the memory 57a match. When the device code included in the communication signal received by the communication unit 54 and the device code of its own device stored beforehand inside the memory 57a match, the control unit 57 causes, in step s15, the display 51 to clear display of the on-order information 51e in accordance with the second clearance instruction information included in the communication signal received by the communication unit 54. Thus, display of the display 51 switches from the display shown in FIG. 8 to the display shown in FIG. 6.

As described above, in the first embodiment, when, with respect to an electronic shelf label 5 that is displaying the on-order information 51e, a prescribed signal (a signal including clearance instruction information including its own device code) is inputted, display of the on-order information 51e is cleared in that electronic shelf label 5. Consequently, a situation where the on-order information 51e that is not necessary to consumers is displayed indefinitely on the electronic shelf label 5 can be prevented.

Further, in the first embodiment, when predetermined input is performed with respect to the operation unit 183 of the order processing terminal 180, a wireless signal including first clearance instruction information is outputted from the order processing terminal 180. Then, when the wireless signal including the first clearance instruction information is outputted from the order processing terminal 180, the information delivery device 40 outputs a communication signal including second clearance instruction information with respect to the electronic shelf label 5 that is displaying the on-order information 51e or in other words with respect to the electronic shelf label 5 to which that information delivery device 40 has outputted the communication signal including the display instruction information. Then, the electronic shelf label 5 that has received that communication signal clears display of the on-order information 51e.

In this manner, in the first embodiment, the order processing terminal 180 can be utilized to clear display of the on-order information 51e on the electronic shelf label 5, so a worker who has performed order processing of the product 6 can check the on-order information 51e being displayed on the electronic shelf label 5 and can then clear display of that on-order information 51e. Thus, a situation where display of the on-order information 51e on the electronic shelf label 5 is cleared without being checked by the worker can be prevented, and oversight in placing an order for the product 6 can be reliably prevented.

For example, when the worker utilizes the order processing terminal 180 to complete order processing in regard to several of the products 6 on a certain product shelf 60, the worker checks the displays of the several electronic shelf labels 5 corresponded to those several products 6 and checks whether or not order processing in regard to those several products 6 has been properly completed. Thereafter, the worker performs a predetermined operation on the order processing terminal 180 to cause a wireless signal including first clearance instruction information to be outputted from the order processing terminal 180. Thus, the worker can check completion of order processing in regard to the several products 6 and can then collectively clear display of the on-order information 51e on the several electronic shelf labels 5 corresponding to those several products 6.

It will be noted that, in the above-described example, the ESL server 10 was instructed by the order processing terminal 180 through the store controller 2 to clear display of the on-order information 51e on the electronic shelf label 5, but the clearance instruction information outputted from the order processing terminal 180 may also be directly inputted to the ESL server 10 such that the ESL server 10 is directly instructed by the order processing terminal 180 to clear display of the on-order information 51e on the electronic shelf label 5.

Further, the electronic shelf label 5 that is displaying the on-order information 51e may also be directly instructed by the order processing terminal 180 to clear display of the on-order information 51e. In this case, an infrared communication unit is disposed in the order processing terminal 180, and an infrared signal including clearing instruction information is outputted from that infrared communication unit. In the electronic shelf label 5, when the infrared signal from the order processing terminal 180 is received by the communication unit 54, the control unit 57 causes the display 51 to clear display of the on-order information 51e.

Further, in the above-described example, display of the on-order information 51e on the electronic shelf label 5 was cleared as a result of the order processing terminal 180 being operated by the worker, but display of the on-order information 51e on the electronic shelf label 5 may also be cleared automatically without burdening the worker.

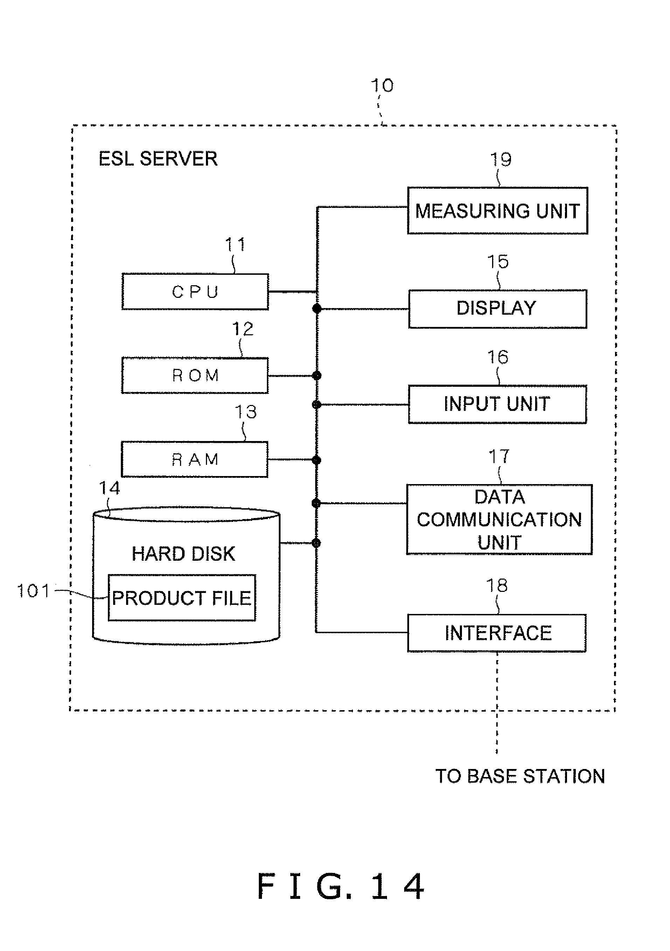

For example, as shown in FIG. 14, a measuring unit 19 that measures time is disposed in the ESL server 10. Additionally, the measuring unit 19 measures elapsed time after the ESL server 10 outputs the display instruction information to the electronic shelf label 5, and when the elapsed time becomes a predetermined amount of time, the ESL server 10 outputs the second clearing instruction information to the electronic shelf label 5. Thus, in the electronic shelf label 5, display of the on-order information 51e is automatically cleared after a certain amount of time after the electronic shelf label 5 displays the on-order information 51e.

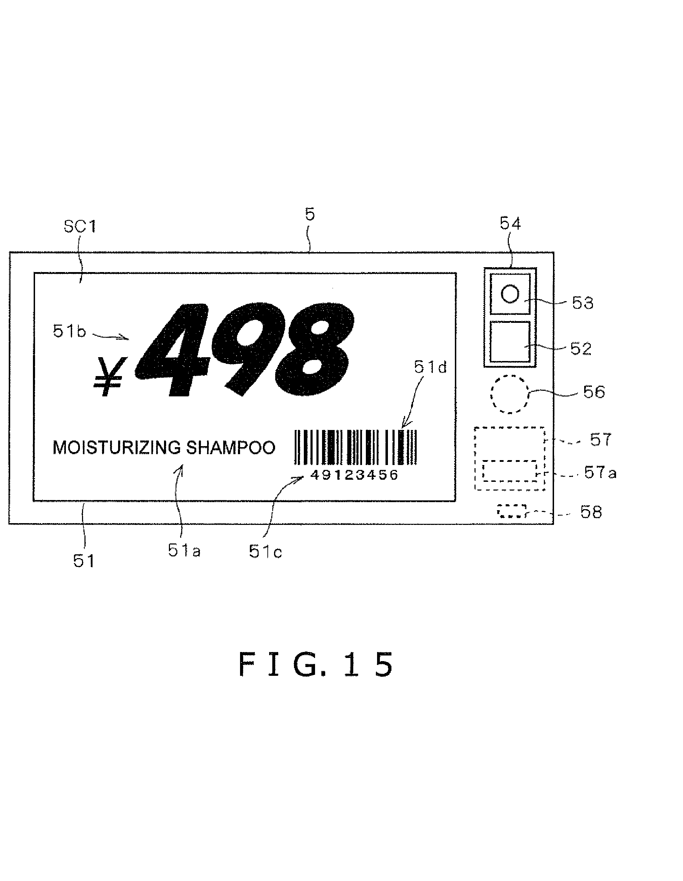

Further, as shown in FIG. 15, a measuring unit 58 that measures time may be disposed in the electronic shelf label 5. In the electronic shelf label 5, the measuring unit 58 measures elapsed time after that electronic shelf label 5 displays the on-order information 51e, and when the elapsed time becomes a predetermined amount of time, the electronic shelf label 5 clears display of the on-order information 51e. Thus, display of the on-order information 51e on the electronic shelf label 5 is automatically cleared.

In this manner, by automatically clearing display of the on-order information 51e on the electronic shelf label 5, working efficiency in regard to order processing improves even though there is the potential for display of the on-order information 51e to be cleared from the electronic shelf label 5 without being checked by the worker.

Further, display of the on-order information 51e on the electronic shelf label 5 may be cleared at the point in time when the product 6 for which an order has been placed and which corresponds to that electronic shelf label 5 actually arrives at the store. In this case, when the product 6 for which an order has been placed arrives in the store in its order quantity, a member of the store staff operates the input unit 16 of the ESL server 10 and inputs the product code of the arrived product 6 to the ESL server 10. The product code inputted to the ESL server 10 is inputted to the CPU 11. The CPU 11 acquires the device code corresponding to the inputted product code from the product file 101. Then, the CPU 11 instructs the electronic shelf label 5 identified by the acquired device code to clear display of the on-order information 51e. Thus, display of the on-order information 51e on the electronic shelf label 5 corresponding to the product 6 for which an order has been placed and which has arrived in the store is cleared.

### OTHER MODIFICATIONS

In the above-described example, the product code of the order placement target product 6 was used in the instruction from the order processing terminal 180 to the store controller 2 to place an order for the product 6, but the device code of the electronic shelf label 5 corresponding to the order placement target product 6 may also be used. In this case, the product file 101 is stored not only in the ESL server 10 but also in the store controller 2. Below, order processing using a device code will be described.

First, the worker inputs the device code of the electronic shelf label 5 corresponding to the order placement target product 6 to the order processing terminal 180. Specifically, the worker uses the barcode reader 182 to read the barcode representing the device code. The device code is printed on the label on the back side of the electronic shelf label 5 corresponding to the order placement target product 6. Thus, in the order processing terminal 180, the device code represented by the barcode that has been read by the barcode reader 182 is inputted to the control unit 185.

It will be noted that the worker may also input the device code to the order processing terminal 180 by operating the operation unit 183 and inputting the numbers representing the device code printed on the label on the back side of the electronic shelf label 5 to the order processing terminal 180.

Alternatively, the electronic shelf label 5 may be configured such that it can display the barcode representing the device code on the display 51 so that the worker may input the device code to the order processing terminal 180 by using the barcode reader 182 to read that barcode. Further, the electronic shelf label 5 may be configured such that it can display the numbers representing the device code on the display 51 so that the worker may input that device code to the order processing terminal 180 by operating the operation unit 183 and inputting the numbers to the order processing terminal 180. In these cases, the remote controller 160 is utilized to ensure that the display screen of the display 51 is switched from the screen shown in FIG. 6 to a screen showing the device code in a barcode or numbers. Thus, the remote controller 160 can be operated to display the device code on the display 51 only when placing an order for the product 6, and a situation where the device code, which is information that is not necessary to consumers, is always displayed on the display 51 can be prevented.

Next, like in step s2, the worker inputs the order quantity of the order placement target product 6 to the order processing terminal 180.

Next, the control unit 185 generates order instruction information including the inputted device code and order quantity. This order instruction information is outputted from the communication unit 184 and is inputted to the store controller 2 through the access point 170.

When the order instruction information is inputted to the store controller 2, the store controller 2 references the product file 101 that it stores and acquires the product code corresponding to the device code included in the order instruction information. Then, the store controller 2 generates order instruction information including the acquired product code and the order quantity of which the store controller 2 has been notified and notifies the head office center thereof.

From then on, the same processing as steps s5 to s7 is performed, and the on-order information 51e is displayed on the electronic shelf label 5 corresponding to the product 6 for which order processing has been performed.

Further, in addition to the product code and the device code, an order placement dedicated code may also be used to place an order for the product 6. In this case, a conversion table for converting the order placement dedicated codes into the product codes is stored in the store controller 2. Additionally, the worker inputs the order placement dedicated code and the order quantity of the product 6 to the order processing terminal 180 by operating the operation unit 183 of the order processing terminal 180. Then, the order processing terminal 180 outputs order instruction information including the inputted order placement dedicated code and order quantity to the store controller 2. The store controller 2 references the stored conversion table and acquires the product code corresponding to the inputted order placement dedicated code. Then, the store controller 2 generates order instruction information including the acquired product code and the order quantity of which the store controller 2 has been notified and notifies the head office center thereof. From then on, the same processing is performed.

Further, the order processing terminal 180 may also be configured such that it can display an order placement history of the product 6 on the display 181. In this case, the ESL server 10 acquires, from the product file 101, the product name corresponding to the product code included in the order completion information received from the store controller 2 and outputs that product name to the order processing terminal 180 through the LAN 21 and the access point 170. The order processing terminal 180 associates the product code and the order quantity inputted by the worker and the product name inputted from the ESL server 10 with each other and stores them. This processing is executed each time placement of an order for the product 6 utilizing the order processing terminal 180 is performed. Thus, each time order processing of the product 6 is performed, the product name, the product code and the order quantity in regard to that product 6 are stored in the order processing terminal 180. In other words, an order placement history of the product 6 is stored in the order processing terminal 180. Then, in the order processing terminal 180, when a predetermined operation is performed with respect to the operation unit 183, the stored order placement history of the product 6 is displayed on the display 181. Thus, the worker can check the order placement history of the product 6 on the order processing terminal 180 that the worker used when placing an order for the product 6, and working efficiency improves.

It will be noted that, when the device code or the order placement dedicated code is used to place an order for the product 6, not only the product name of the order placement target product 6 but also its product code are transmitted from the ESL server 10 to the order processing terminal 180. Thus, even when the device code or the order placement dedicated code is used to place an order for the product 6, the order placement history including the product name, the product code and the order quantity in regard to the product 6 that is on order can be displayed on the display 181 of the order processing terminal 180.

### SECOND EMBODIMENT

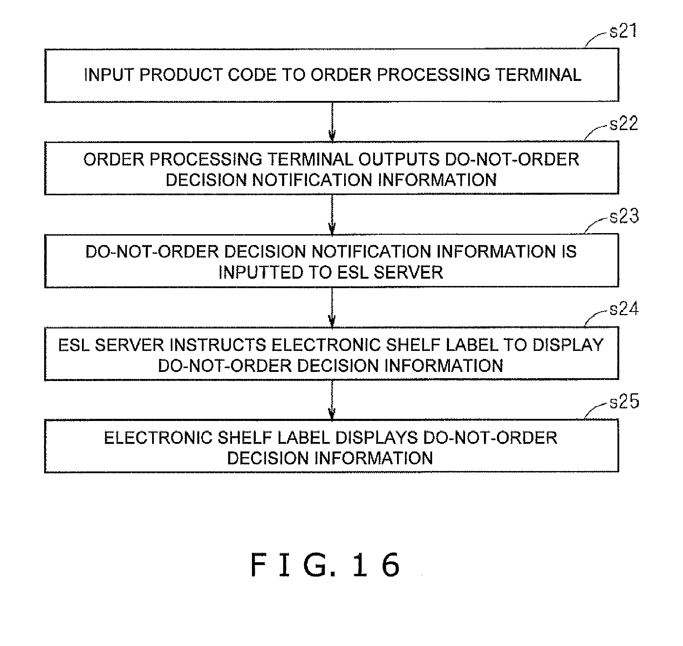

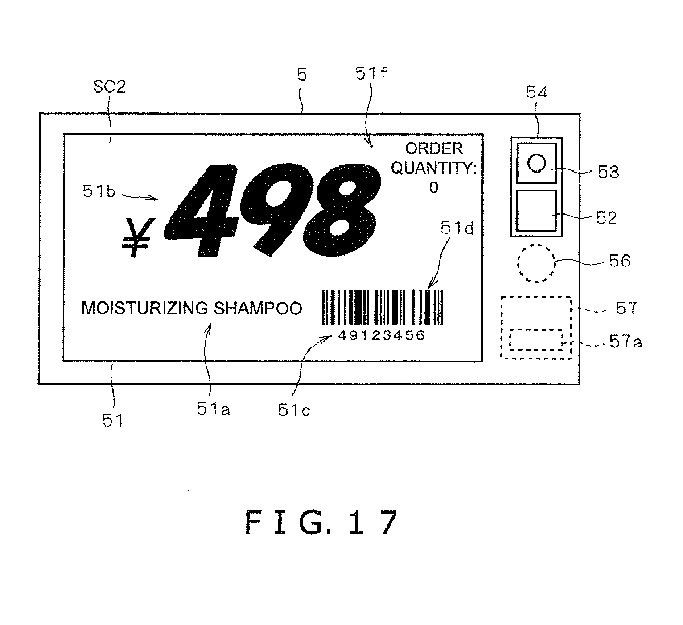

Referring now to FIGS. 16 and 17, a product management system 100 in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

In the product management system 100 pertaining to the first embodiment, when placement of an order for a product 6 has not been performed, the display of the electronic shelf label 5 corresponding to that product 6 does not change from the usual display shown in FIG. 6. For that reason, a worker cannot, simply by looking at the display of the electronic shelf label 5, distinguish whether that product 6 was intentionally not ordered or whether an order for that product 6 was not placed due to simple order placement oversight, even if a determination of whether or not to place an order for the product 6 corresponding to that electronic shelf label 5 was actually made on the part of a worker. Consequently, there is the potential for an order to be placed for a product 6 for which order placement is not essentially necessary.

Thus, in the second embodiment, there is provided a product management system 100 that can display, on the electronic shelf label 5, do-not-order decision information indicating a decision not to order the product 6 corresponding to that electronic shelf label 5.

FIG. 16 is a flowchart showing a series of processing steps for displaying do-not-order decision information in regard to a certain product 6 on the electronic shelf label 5 corresponding to that product 6 in the product management system 100 pertaining to the second embodiment of the present invention. It will be noted that the configuration of the product management system 100 pertaining to the second embodiment is the same as that of the product management system 100 pertaining to the first embodiment.

As shown in FIG. 16, in step s21, a member of the store staff inputs, to the order processing terminal 180 in the same manner as in step s1, the product code of a product 6 that the member has decided not to order. The product code inputted to the order processing terminal 180 is inputted to the control unit 185.

Next, in step s22, when the member of the store staff performs a predetermined operation with respect to the operation unit 183 of the order processing terminal 180, the control unit 185 generates do-not-order decision notification information. The do-not-order decision notification notifies the ESL server 10 that a decision has been made not to order the product 6 identified by the inputted product code. The generated do-not-order decision notification information is outputted from the communication unit 184. The product code inputted to the control unit 185 is included in this do-not-order decision notification information.

The do-not-order decision notification information outputted from the order processing terminal 180 is inputted to the store controller 2 through the access point 170 and the LAN 21 in step s23. The store controller 2 inputs the inputted do-not-order decision notification information to the ESL server 10.

Next, in step s24, the ESL server 10 acquires, from the product file 101, the device code corresponding to the product code included in the inputted do-not-order decision notification information and generates display instruction information instructing the electronic shelf label 5 identified by that device code to display the do-not-order decision information. In the ESL server 10, the CPU 11 acquires, from the product file 101, the device code corresponding to the product code included in the inputted do-not-order decision notification information. Thereafter, the CPU 11 generates display instruction information including that device code. Then, the CPU 11 outputs the display instruction information to each of the communication devices 4 through the interface 18 and the base station 41. A communication signal including the display instruction information is outputted from each of the communication devices 4. Thus, the display instruction information instructing display of the do-not-order decision information is outputted from the ESL server 10 to the electronic shelf label 5 corresponding to the product 6 for which order placement has been determined not necessary.

In the electronic shelf label 5, the control unit 57 determines whether or not the device code included in the communication signal received by the communication unit 54 and the device code of its own device stored beforehand inside the memory 57a match. When the device code included in the communication signal received by the communication unit 54 and the device code of its own device stored beforehand inside the memory 57a match, the control unit 57 causes, in step s25, the display 51 to display the do-not-order decision information in accordance with the display instruction information included in the communication signal received by the communication unit 54. FIG. 17 is a diagram showing a state where do-not-order decision information 51f is displayed on the display 51. In the example shown in FIG. 17, a character string reading "Order Quantity: 0" is displayed on the display 51 as the do-not-order decision information 51f. It will be noted that, as the do-not-order decision information 51f, a figure or a symbol may also be displayed on the display 51, or a combination of two or more of characters, a figure and a symbol may also be displayed on the display 51.

In this manner, in the electronic shelf label 5 pertaining to the second embodiment, the do-not-order decision information 51f indicating that a decision has been made not to order the product 6 corresponding to that electronic shelf label 5 (or in other words, the do-not-order decision information 51f indicating that a worker has judged that it is not necessary to place an order for that product 6) is displayed, so a worker can, simply by looking at the display of the electronic shelf label 5, check whether or not an order for the product 6 corresponding to that electronic shelf label 5 was intentionally not placed. Thus, when a worker checks display of the on-order information 51e on the electronic shelf label 5 to place an order for a product 6 for which there was order placement oversight, a situation where the worker performs order processing in regard to a product 6 for which order placement is essentially not necessary can be prevented. Thus, working efficiency improves.

### THIRD EMBODIMENT

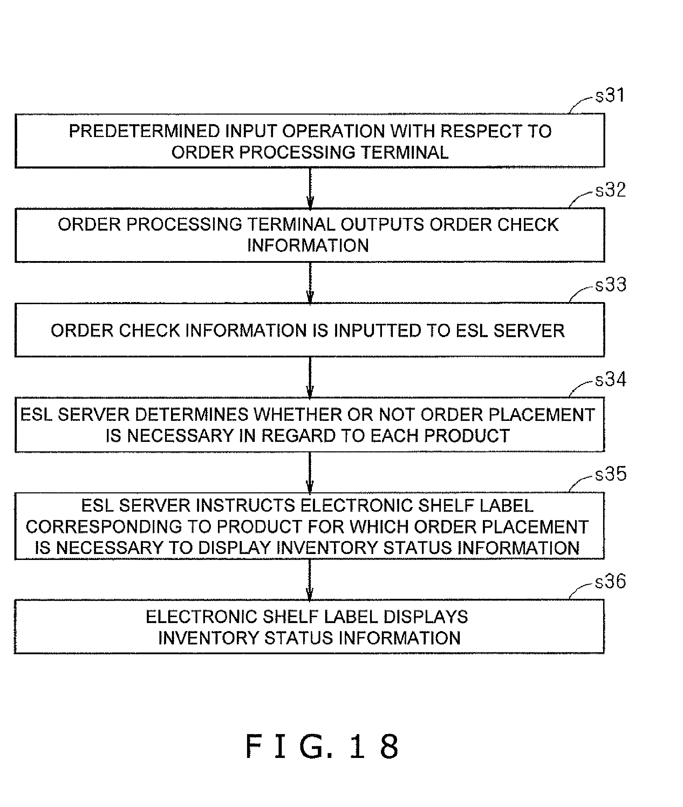

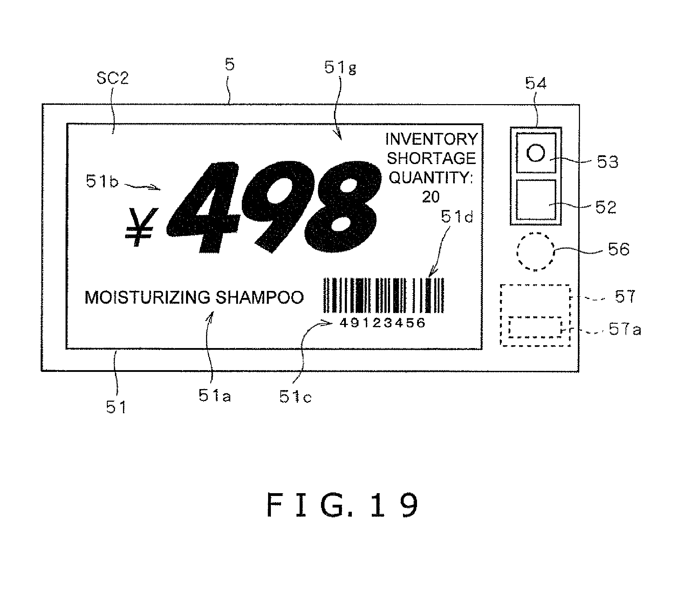

Referring now to FIGS. 18 and 19, a product management system 100 in accordance with a second embodiment will now be explained. In view of the similarity between the first and third embodiments, the parts of the third embodiment that are identical to the parts of the first embodiment will be given the same reference numerals as the parts of the first embodiment. Moreover, the descriptions of the parts of the third embodiment that are identical to the parts of the first embodiment may be omitted for the sake of brevity.

In the product management system 100 pertaining to the first embodiment described above, a worker places orders for the products 6 while checking the quantities of the products 6 arranged on the product shelf 60. For that reason, order processing takes effort. Further, even when the worker references a product order placement list listing the order placement target products 6 and places orders for the products 6, it is necessary for the worker to hold the product order placement list in hand and operate the order processing terminal 180, which can be extremely troublesome.

Thus, in the third embodiment, there is provided a product management system 100 where the worker can judge, simply by looking at the display of the electronic shelf label 5, whether or not the worker should place an order for the product 6 corresponding to that electronic shelf label 5. Specifically, in the third embodiment, inventory status information indicating whether or not placement of order for a product 6 corresponding to an electronic shelf label 5 is necessary is displayed on that electronic shelf label 5.

FIG. 18 is a flowchart showing a series of processing steps for displaying the inventory status information in regard to a certain product 6 on the electronic shelf label 5 corresponding to that the product 6 in the product management system 100 pertaining to the third embodiment of the present invention. It will be noted that the configuration of the product management system 100 pertaining to the third embodiment is the same as that of the product management system 100 pertaining to the first embodiment described above.

As shown in FIG. 18, in step s31, when a predetermined operation is performed with respect to the operation unit 183 of the order processing terminal 180, in step s32, the control unit 185 generates order check information instructing the ESL server 10 to check whether or not an order should be placed in regard to each of the products 6. This order check information is outputted from the communication unit 184 and is thereafter inputted to the store controller 2 through the access point 170 and the LAN 21 in step s33. Then, the store controller 2 outputs the inputted order check information to the ESL server 10.

When the order check information is inputted to the ESL server 10, in step s34, the ESL server 10 determines whether or not order placement is necessary in regard to each of the products 6 registered in the product file 101. In each record 102 in the product file 101, the quantity of current inventory (hereinafter called "current inventory quantity") and the necessary inventory quantity of the product 6 corresponding to that record 102 are registered. Here, "necessary inventory quantity" means an inventory quantity that is necessary to have a minimum of in the store. Further, not only the number of the products 6 that are actually present inside the store but also the number of the products 6 that have been ordered but have not yet arrived inside the store are included in the current inventory quantity. In the ESL server 10, the CPU 11 compares the current inventory quantity and the necessary inventory quantity in regard to each of the products 6 registered in the product file 101. When the current inventory quantity of a certain product 6 is less than the necessary inventory quantity, the CPU 11 determines that there is a shortage of that product 6 and that it is necessary to place an order for that product 6 and uses a value obtained by subtracting the current inventory quantity from the necessary inventory quantity as an inventory shortage quantity in regard to that product 6. On the other hand, when the current inventory quantity of a certain product 6 is equal to or greater than the necessary inventory quantity, the CPU 11 determines that the inventory of that product 6 is sufficient and that it is not necessary to place an order for that product 6.

When the CPU 11 determines whether or not order placement is necessary in regard to each of the products 6 registered in the product file 101, in step s35, the CPU 11 generates display instruction information instructing the electronic shelf label 5 corresponding to a product 6 for which the CPU 11 has determined order placement necessary to display inventory status information. In this embodiment, the inventory status information preferably includes the inventory shortage quantity in regard to the product 6 corresponding to the electronic shelf label 5 to which the display instruction information is sent. The display instruction information generated by the CPU 11 is inputted to the target electronic shelf label 5 through the interface 18, the base station 41 and the communication devices 4.

When the electronic shelf label 5 receives the display instruction information sent thereto from the ESL server 10, in step s36, the control unit 57 causes the display 51 to display the inventory status information. Thus, in regard to all of the products 6 for which order placement has been determined necessary in the ESL server 10, the inventory status information is displayed on the electronic shelf labels 5 corresponding to those products 6. FIG. 19 is a diagram showing a state where the inventory status information 5 1 g is displayed on the electronic shelf label 5. In the example of FIG. 19, the inventory shortage quantity included in the display instruction information that the electronic shelf label 5 has received is displayed on that electronic shelf label 5 as the inventory status information 51g.

It will be noted that, as the inventory status information 5 1 g displayed on the electronic shelf label 5, the current inventory quantity of the product 6 corresponding to that electronic shelf label 5 may also be employed. In this case, it suffices for the ESL server 10 to output, to the electronic shelf label 5, display instruction information including the current inventory quantity of the product 6 corresponding to that electronic shelf label 5.

Further, the electronic shelf label 5 may also display a figure or a symbol rather than characters as the inventory status information 51 g or may also display a combination of two or more of characters, a figure and a symbol.

When the worker checks display of the inventory status information 5 1 g on the electronic shelf label 5, the worker utilizes the order processing terminal 180 to place an order for the product 6 corresponding to that electronic shelf label 5. When the inventory shortage quantity is displayed as the inventory status information 51 g on the electronic shelf label 5, the worker may place an order for the same number of the product 6 as that inventory shortage quantity, or may place an order for a smaller number of the product 6 than that inventory shortage quantity, or may place an order for a larger number of the product 6 than that inventory shortage quantity. When order processing is performed in regard to a certain product 6, the on-order information 51e is displayed on the electronic shelf label 5 corresponding to that product 6. At this time, the inventory status information 51g displayed on that electronic shelf label 5 is cleared. In other words, when the electronic shelf label 5 receives display instruction information in regard to the on-order information 51e from the ESL server 10, the electronic shelf label 5 clears display of the inventory status information 51g.

In this manner, in the product management system 100 pertaining to the third embodiment, the inventory status information 51 g instructing placement of an order for the product 6 corresponding to an electronic shelf label 5 is displayed on that electronic shelf label 5, so the worker can, simply by looking at the display of the electronic shelf label 5, judge whether or not it is necessary to place an order for the product 6 corresponding to that electronic shelf label 5. Thus, the working efficiency of order processing improves.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. An electronic shelf label (5) comprising:
a display unit (51) configured and arranged to display product information (51a, 51b, 51c, 51d) pertaining to a product (6) corresponding to the electronic shelf label (5); and
a display control unit (57) configured to control the display unit (51) to display on-order information (51e) when the display control unit (57) receives a first prescribed signal from outside the electronic shelf label (5), the on-order information (5e) indicating that the product (6) corresponding to the electronic shelf label (5) is on order.

2. The electronic shelf label (5) according to claim 1, wherein
the display control unit (57) is configured to control the display unit (51)to display at least one of a character, a figure and a symbol as the on-order information (51e).

3. The electronic shelf label (5) according to claim 1 or 2, wherein
the display control unit (57) is configured to receive the first prescribed signal including information representing an order quantity of the product (6), and to control the unit (51)to display the order quantity as the on-order information (51e).

4. The electronic shelf label (5) according to any of the claims 1 to 3, further comprising
a measurement unit configured to measure elapsed time for which the on-order information (51e) has been displayed on the display unit,
the display control unit (57) being configured to control the unit (51)to clear display of the on-order information (51e) when the elapsed time measured in the measurement unit reaches a predetermined amount of time.

5. The electronic shelf label (5) according to any of the claims 1 or 3, wherein
the display control unit (57) is configured to control the unit (51)to clear display of the on-order information (51e) when the display control unit (57) receives a second prescribed signal from outside the electronic shelf label (5).

6. The electronic shelf label (5) according to any one of claims 1 to 6, wherein
the display control unit (57) is further configured to control the unit (51)to display do-not-order decision information indicating placement of order for the product has been determined to be unnecessary.

7. The electronic shelf label (5) according to claim 1, wherein
the display control unit (57) is further configured to control the unit (51) to display inventory status information indicating whether or not placement of order for the product (6) is required.

8. A product management system (100) comprising:
an electronic shelf label (5) according to any one of claims 1 to 7;
an information delivery device (40) configured and arranged to deliver the product information to the electronic shelf label (5); and
a portable order processing terminal (180) configured and arranged to perform an order placement operation to instruct placement of order for the product (6),
the information delivery device (40) being configured and arranged to output a first prescribed signal to the electronic shelf label (5) corresponding to the product (6) for which the order placement operation has been performed in the order processing terminal.

9. The product management system (100) according to claim 8, wherein
the portable order processing terminal (180) is configured and arranged to output a third prescribed signal when a prescribed input is received in an input unit of the order processing terminal (180) from outside,
the information delivery device (40) is configured and arranged to output a second prescribed signal to the electronic shelf label (5) when the third prescribed signal is outputted from the order processing terminal (180), and
the electronic shelf label (5) is configured and arranged to clear display of the on-order information (51e) when the second prescribed signal is inputted.

10. The product management system (100) according to claim 8 or 9, wherein
the portable order processing terminal (180) is configured and arranged to output do-not-order decision notification to the information delivery device (40) when placement of order for the product is determined to be unnecessary,
the information delivery device (40) is configured and arranged to output the do-not-order decision notification to the electronic shelf label (5), and
the electronic shelf label (5) is further configured to display do-not-order decision information indicating placement of order for the product has been determined to be unnecessary.

11. The product management system (100) according to any of the claims 8 to 10, wherein
the electronic shelf label (5) is further configured to display inventory status information indicating whether or not placement of order for the product (6) is required.
